# EUROPÄISCHE PATENTSCHRIFT

(11) **EP 3 560 796 B1**
(45) Veröffentlichungstag und Bekanntmachung des Hinweises auf die Patenterteilung: **16.02.2022**
(21) Anmeldenummer: 19163838.6
(22) Anmeldetag: 19.03.2019
(51) Int. Cl.: B62D 13/06, G08G 1/16, B62D 15/02, B60R 1/00, G06K 9/00

(54) **VERFAHREN ZUM BETREIBEN EINES ANHÄNGERRANGIERASSISTENZSYSTEMS EINES KRAFTFAHRZEUGS UND ANHÄNGERRANGIERASSISTENZSYSTEM FÜR EIN KRAFTFAHRZEUG**
TRAILER DRIVING ASSISTANCE SYSTEM FOR A MOTOR VEHICLE AND METHOD FOR OPERATING A TRAILER DRIVING ASSISTANCE SYSTEM OF A MOTOR VEHICLE
PROCÉDÉ DE FONCTIONNEMENT D'UN SYSTÈME D'AIDE À LA MANOEUVRE D'UN VÉHICULE AUTOMOBILE ET SYSTÈME D'AIDE À LA MANOEUVRE DE REMORQUE POUR UN VÉHICULE AUTOMOBILE

(30) Priorität: 26.04.2018 DE 102018206494
(43) Veröffentlichungstag der Anmeldung: 30.10.2019
(73) Patentinhaber: VOLKSWAGEN AKTIENGESELLSCHAFT, 38440 Wolfsburg (DE)
(72) Erfinder: Ziebart, Sascha, 38547 Calberlah (Wettmershagen) (DE); Hüger, Philipp, 38471 Rühen (DE)

(56) Entgegenhaltungen:
- DE-A1-102014 107 917
- DE-A1-102016 109 954
- GB-A- 2 541 906
- US-A1- 2016 379 411

## Beschreibung

Die Erfindung betrifft ein Verfahren zum Betreiben eines Anhängerrangierassistenzsystems eines Kraftfahrzeugs und ein Anhängerrangierassistenzsystem für ein Kraftfahrzeug der in den Oberbegriffen der unabhängigen Patentansprüche angegebenen Art. Des Weiteren betrifft die Erfindung noch ein Kraftfahrzeug mit einem solchen Anhängerrangierassistenzsystem.

Anhängerrangierassistenzsysteme zum Unterstützen eines Fahrers eines aus einem Zugfahrzeug und einem Anhänger gebildeten Gespanns benötigen üblicherweise geometrische Informationen über einen aktuell angehängten Anhänger. Dies ist insbesondere dann wichtig, wenn das Anhängerrangierassistenzsystem den Anhänger in eine Zielposition, zum Beispiel in eine Parklücke, durch automatisches Übernehmen der Längsführung und/oder Querführung rangieren soll. Wie nachfolgend erläutert, sind bereits Verfahren zum Betreiben von Anhängerrangierassistenzsystemen und entsprechende Anhängerrangierassistenzsysteme bekannt.

Die DE 10 2015 226 695 A1 beschreibt ein Verfahren zur Bestimmung einer Überhanglänge eines einachsigen Anhänger mit starrer Deichsel. Die Überhanglänge beschreibt den Abstand zwischen der Anhängerachse und dessen Heck. Ein aus einem Zugfahrzeug und dem Anhänger bestehendes Gespann wird auf einer Kreisbahn mit einem konstanten Radius bewegt. Mittels einer Kamera wird ein Bewegungsvektor des Anhängers bestimmt. Zudem werden eine Deichsellänge des Anhängers und ein Knickwinkel des Anhängers bestimmt. Die Überhanglänge wird aus der Deichsellänge, dem Knickwinkel und dem Bewegungsvektor ermittelt. Die Länge des Anhängers ergibt sich dann aus der Summe der ermittelten Überhanglänge und der Deichsellänge.

Die DE 10 2015 224 786 A1 beschreibt ein Verfahren zum Rangieren eines Gespanns, bestehend aus einem Zugfahrzeug und einem Anhänger, welcher mittels einer nichtlenkbaren Deichsel mit dem Zugfahrzeug verbunden ist. Eine Deichsellänge und ein Anhängerüberhang werden während der Fahrt des Gespanns unter Verwendung einer Rückfahrkamera am Zugfahrzeug bestimmt. Ein Anhängerrangierassistent unterstützt in Kenntnis der ermittelten Deichsellänge und dem ermittelten Anhängerüberhang einen rückwärtigen Einparkvorgang des Gespanns, indem eine automatische Längsführung und/oder Querführung des Zugfahrzeugs mittels des Assistenzsystems erfolgt.

Die DE 10 2015 210 816 A1 zeigt ein Verfahren zum Bestimmen einer Länge eines Anhängers. Bei von einem Kraftfahrzeug abgekoppeltem Anhänger erhält ein Fahrer des Kraftfahrzeug Anweisungen, das Kraftfahrzeug in einer vorgegebenen Anordnung zu dem Anhänger ausrichten, bevor die Seitenansicht erfasst wird.

Die DE 10 2016 216 962 B3 zeigt ein Kamera-Monitor-System als Ersatz für einen Außenspiegel eines LKWs zum Einsparen von Treibstoffkosten. Mittels einer Kamera wird ein an den LKW angehängter Anhänger erfasst und mittels eines Displays angezeigt, welches einen herkömmlichen Außenspiegel ersetzt. Bei angehängtem Anhänger erfolgt eine Nachführung eines auf dem Display angezeigten Bildausschnittes nach außen, um einem Fahrer die Sicht auf eine Hinterkante seines Anhängers anstatt nur auf dessen Seitenplane zu ermöglichen. Diese Notwendigkeit ergibt sich durch die wegfallende Möglichkeit, durch Bewegung des Kopfes das Sichtfeld zu verändern, wie dies bei herkömmlichen Spiegeln der Fall ist.

Die DE 10 2016 109 954 A1 zeigt ein Verfahren zum Unterstützen beim Rangieren eines Gespanns bestehend aus einem Kraftfahrzeug und einem Anhänger, bei dem mittels eines geometrischen Modells des Anhängers die Position einer Offenstellung einer Klappe des Anhängers im Bild einer Rückfahrkamera angezeigt wird. Die Erfassung der Daten des geometrischen Modells des Anhängers erfolgt dabei über eine nutzerseitige Eingabe von Werten oder mittels eines QR-Codes. Nachteilig bei dem bekannten Verfahren ist, dass zur Eingabe der Maße für das geometrische Modell ein Benutzer die Maße des Anhängers kennen muss. DE 10 2016 109954 A1 ist als nächstliegender Stand der Technik zu sehen.

Die DE 10 2014 107 917 A1 zeigt ein Verfahren zur Kollisionsvermeidung für ein Gespann bestehend aus einem Kraftfahrzeug und einem Anhängern. Durch eine optische Erfassungsvorrichtung werden bei einer Kurvenfahrt die Maße des Anhängers ermittelt, sodass eine Fahrtrajektorie des Anhängers berechnet werden kann. Nachteilig bei dem bekannten Verfahren ist, dass ein Benutzer nicht weiß, ob die Maße des Anhängers von der optischen Erfassungsvorrichtung richtig erfasst wurden.

Die US 2016/0379411 A1 zeigt ein System, das mittels einer Anzeige- und einer Kameravorrichtung Totwinkelbereiche eines Kraftfahrzeugs sichtbar macht. Die Kameravorrichtung umfasst zumindest eine Kamera, die jeweils einen Totwinkelbereich des Kraftfahrzeugs beobachtet. Die jeweils aufgenommen Bilder der Kameravorrichtung wird zusammen mit einem geometrischen Modell des Kraftfahrzeugs derart überlagert, sodass der Fahrer des Kraftfahrzeugs durch einen Umriss des Kraftfahrzeugs, insbesondere eines Aufliegers eines Lastkraftwagens, durchschauen kann. Nachteilig bei dem System ist, dass die geometrischen Maße durch den Fahrer nicht nachjustiert werden können.

Die GB 2541906 A zeigt ein Anzeigesystem für ein Rückfahrkamerasystem eines Gespanns bestehend aus einem Kraftfahrzeug und einem Anhänger, wobei auf dem Kraftfahrzeug und dem Anhänger jeweils eine Rückfahrkamera angebracht ist. Dabei werden mittels einer Bildverarbeitungsvorrichtung die von der jeweiligen Rückfahrkamera aufgenommenen Bilder derart überlagert, sodass der Fahrer im Bild der kraftfahrzeugseitigen Rückfahrkamera durch den Anhänger hindurchsehen kann. Nachteilig bei dem Rückfahrkamerasystem ist, dass der Benutzer nicht weiß, ob die Maße des Anhängers korrekt erfasst wurden.

Es ist die Aufgabe der vorliegenden Erfindung, eine Lösung bereitzustellen, mittels welcher ein besonders sicheres und zuverlässiges Rangieren eines aus einem Kraftfahrzeug und einem Anhänger gebildeten Gespanns in eine Zielposition unterstützt wird.

Diese Aufgabe wird durch ein Verfahren zum Betreiben eines Anhängerrangierassistenzsystems eines Kraftfahrzeugs sowie durch ein Anhängerrangierassistenzsystem für ein Kraftfahrzeug mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben eines Anhängerrangierassistenzsystems eines Kraftfahrzeugs wird ein Rangiervorgang eines aus dem Kraftfahrzeug und einem Anhänger gebildeten Gespanns in eine Zielposition mittels des Anhängerrangierassistenzsystems unterstützt. Das erfindungsgemäße Verfahren zeichnet sich dadurch aus, dass der Anhänger mittels einer Sensoreinrichtung des Kraftfahrzeugs bei an das Kraftfahrzeug angekoppeltem Anhänger erfasst wird, wobei den erfassten Anhänger betreffende Sensordaten an eine Auswerteeinrichtung des Anhängerrangierassistenzsystems übertragen werden. Basierend auf den ermittelten Sensordaten ermittelt die Auswerteeinrichtung Abmessungen des Anhängers in Längsrichtung, Querrichtung und Hochrichtung des Anhängers. Der Rangiervorgang des Gespanns in die Zielposition wird dann unter Berücksichtigung der ermittelten Abmessungen des Anhängers unterstützt.

Es ist also erfindungsgemäß vorgesehen, Informationen beziehungsweise Daten über die dreidimensionale Geometrie des Anhängers und insbesondere des Anhängeraufbaus zu gewinnen, um diese Daten beziehungsweise Informationen, also die Abmessungen des Anhängers in Längsrichtung, Querrichtung und Hochrichtung des Anhängers, beim Unterstützen des Rangiervorgangs des Gespanns in die Zielposition zu berücksichtigen. Die Sensoreinrichtung des Kraftfahrzeugs kann unterschiedlichste Sensoren am Kraftfahrzeug aufweisen, welche das Fahrzeugumfeld nach vorne, zur Seite und nach hinten erfassen können. Beispielsweise kann die Sensoreinrichtung Kameras an unterschiedlichen Positionen des Kraftfahrzeugs aufweisen, mittels welchen der angekoppelte Anhänger vollständig erfasst werden kann. Als Sensoren der Sensoreinrichtung können auch Radar- und/oder Lidarsensoren verwendet werden. Die Sensoren der Sensoreinrichtung des Kraftfahrzeugs befinden sich vorzugsweise in beziehungsweise an einer B-Säule oder C-Säule des Kraftfahrzeugs und/oder in den Seitenspiegeln. Zur Erfassung des gesamten Anhängers ist gegebenenfalls eine Kurvenfahrt notwendig. Mittels der Auswerteeinrichtung des Anhängerrangierassistenzsystems wird anhand der Sensordaten die Geometrie des Anhängers erfasst. Durch das Sammeln umfangreicher Sensordaten, bevorzugt über mehrere Sensoren der Sensoreinrichtung, welche an unterschiedlichen Positionen des Kraftfahrzeugs verbaut sind, ist es möglich, ein dreidimensionales Modell des Anhängers in Kenntnis der Abmessungen des Anhängers in Längsrichtung, Querrichtung und Hochrichtung zu erstellen.

So kann das Anhängerrangierassistenzsystem einen Fahrer des Gespanns besonders zuverlässig und sicher in eine bestimmte Zielposition manövrieren, beispielsweise in eine Parklücke. Im einfachsten Fall gibt das Anhängerrangierassistenzsystem über geeignete Ausgabemittel im Kraftfahrzeug dem betreffenden Fahrer beispielsweise nur Hinweise, wie er das Gespann zu bewegen hat, um die Zielposition zu erreichen. Auch ist es möglich, dass das Anhängerrangierassistenzsystem eine automatische Längsführung und/oder Querführung des Kraftfahrzeugs unter Berücksichtigung der gewonnen beziehungsweise ermittelten Abmessungen des Anhängers übernimmt, sodass es ohne ein Zutun des betreffenden Fahrers möglich ist, das Gespann vollautomatisch in eine bestimmte Zielposition zu rangieren, beispielsweise beim rückwärts einparken in eine Parklücke.

Erfindungsgemäß ist es vorgesehen, dass basierend auf den ermittelten Abmessungen ein dreidimensionales Modell des Anhängers erstellt und so angezeigt wird, dass es ein reales angezeigtes Abbild des Anhängers teiltransparent überlagert. Das dreidimensionale Modell des Anhängers und das reale Abbild des Anhängers können beispielsweise mittels eines Displays im Bereich einer Mittelkonsole des Kraftfahrzeugs angezeigt werden. So kann ein Fahrer auf einfache Weise erkennen, ob und inwiefern die Abmessungen des Anhängers korrekt erfasst worden sind, da das dreidimensionale Modell als teiltransparente Überlagerung über dem realen Abbild des Anhängers dargestellt wird.

Erfindungsgemäß ist ebenfalls vorgesehen, dass eine Benutzeraufforderung ausgegeben wird, jeweilige Außenkanten des dreidimensionales Modells des Anhängers mittels einer Bedieneinrichtung des Kraftfahrzeugs so zu verschieben, bis die Außenkanten mit den Außenkanten des realen Abbildes des Anhängers übereinstimmen, wobei die Außenkanten entsprechend einer erfassten Betätigung der Bedieneinrichtung verschoben werden. Beispielsweise kann es sich bei der Bedieneinrichtung um einen Touchscreen handeln, mittels welchem das dreidimensionale Modell und das reale Abbild des Anhängers angezeigt werden. Der Fahrer kann - sofern erforderlich - die Außenkanten des dreidimensionalen Modells durch einfache Manipulation am Touchscreen so verschieben, bis die Außenkanten des dreidimensionalen Modells mit den Außenkanten des realen Abbilds des Anhängers übereinstimmen. In dem Zusammenhang kann es vorgesehen sein, dass der Benutzer beziehungsweise Fahrer aufgefordert wird, den Abschluss seiner Korrekturmaßnahmen - also das Verschieben der Außenkanten des dreidimensionalen Modells des Anhängers - zu bestätigen. Sobald diese Bestätigung erfasst worden ist, werden die verschobenen Außenkanten des dreidimensionalen Modells des Anhängers zugrunde gelegt, um die Abmessungen des Anhängers in allen Raumrichtungen gegebenenfalls zu korrigieren. Diese korrigierten Abmessungen des Anhängers und das korrigierte dreidimensionale Modell des Anhängers werden dann von dem Anhängerrangierassistenzsystem verwendet, um den Fahrer beim Rangiervorgang des Gespanns in die Zielposition zu unterstützen. Der Fahrer des Gespanns kann so auf einfache Weise das ermittelte dreidimensionale Modell des Anhängers bei Bedarf korrigieren, sodass besonders exakte Abmessungen des Anhängers in allen Raumrichtungen beim Rangiervorgang zugrunde gelegt werden können.

Mittels des erfindungsgemäßen Verfahrens ist es möglich, die Abmessungen des betreffenden Anhängers in allen Raumrichtungen zu ermitteln. In Kenntnis der Abmessungen ist es möglich, das Gespann besonders sicher und zuverlässig in eine vorgegebenen Zielposition, beispielsweise in eine Parklücke, zu rangieren. So können insbesondere Kollisionen mit Hindernissen vermieden werden. Dadurch, dass die Abmessungen des Anhängers nicht nur in Längsrichtung sondern auch in Breitenrichtung und in Hochrichtung bekannt sind, können vor allem auch seitliche Hindernisse oder auch beispielsweise eine Höhe einer Parklücke begrenzende Hindernisse zuverlässig beim Rangieren in die Zielposition berücksichtigt werden.

Eine vorteilhafte Ausführungsform der Erfindung sieht vor, dass mittels einer Ausgabeeinrichtung des Kraftfahrzeugs eine Aufforderung zum Durchführen einer Kurvenfahrt ausgegeben wird, falls anhand der Sensordaten ermittelt wird, dass die Abmessungen des Anhängers nicht vollständig basierend auf den Sensordaten ermittelt werden konnten. Je nach Erfassungsbereich von einzelnen Sensoren und Positionierung der Sensoren der Sensoreinrichtung kann es passieren, dass je nach relativer Positionierung des Anhängers zum Kraftfahrzeug keine vollständige beziehungsweise zuverlässige Erfassung der Abmessungen des Anhängers möglich ist. Fluchten beispielsweise das Kraftfahrzeug und der Anhänger, kann es mitunter schwierig oder unmöglich sein, je nach Erfassungsbereich der Sensoreinrichtung, solche Sensordaten zu liefern, anhand derer die vollständigen Abmessungen des Anhängers erfasst werden können. Für solche Fälle ist es vorzugsweise vorgesehen, dass mittels der besagten Ausgabeeinrichtung des Kraftfahrzeugs die Aufforderung zum Durchführen einer Kurvenfahrt ausgegeben wird. Der Fahrer des Gespanns kann so beispielsweise akustisch und/oder optisch darauf hingewiesen werden, dass die vollständige Vermessung des Anhängers momentan noch nicht möglich war und er deswegen die besagte Kurvenfahrt vornehmen soll. Dabei können beispielsweise auch optische Hinweise ausgegeben werden, wie weit der Fahrer das Lenkrad einschlagen soll, um einen hinreichend engen Kurvenradius zu durchfahren, sodass die Abmessungen des Anhängers zuverlässig ermittelt werden können. Auf diese Weise kann sichergestellt werden, dass die führ den Rangiervorgang wichtigen Abmessungen des Anhängers vollständig in allen Raumrichtungen erfasst werden können.

Eine weitere vorteilhafte Ausführungsform der Erfindung sieht vor, die Ausgabeeinrichtung die durchzuführende Kurvenfahrt anzeigt. Beispielsweise kann über ein Display oder auch über ein Head-Up-Display im Kraftfahrzeug angezeigt werden, was für eine Trajektorie mit dem Kraftfahrzeug bei angehängtem Anhänger abgefahren werden soll. So erhält der Fahrer ganz konkrete Anweisungen, wie weit er beispielsweise das Lenkrad einschlagen muss, um die durchzuführende Kurvenfahrt auch bestimmungsgemäß durchzuführen, infolgedessen die Sensoreinrichtung genügend brauchbare und hinreichend gute Daten liefern kann, auf deren Basis die Abmessungen des Anhängers in allen Raumrichtungen ermittelt werden können. Auch kann dem Fahrer beispielsweise über die Ausgabeeinrichtung optisch und/oder akustisch mitgeteilt werden, wenn genügend hinreichend gute Sensordaten gesammelt werden konnten, um die Abmessungen des Anhängers in allen Raumrichtungen zu erfassen. So bekommt der Fahrer einen Hinweis, wann er die Kurvenfahrt beenden kann, sodass er danach das Gespann in die Nähe der gewünschten Zielposition bewegen kann, von wo ausgehend das Anhängerrangierassistenzsystem beispielsweise die Längsführung und Querführung vollautonom übernimmt, um in Kenntnis der ermittelten Abmessungen des Anhängers das Gespann zuverlässig in die Zielposition zu manövrieren.

In weiterer vorteilhafter Ausgestaltung der Erfindung ist es vorgesehen, dass als das reale Abbild des Anhängers ein momentan mittels einer Kamera der Sensoreinrichtung aufgezeichnetes Bild des Anhängers oder ein während einer Kurvenfahrt des Gespanns aufgezeichnetes Bild des Anhängers verwendet wird. Im ersteren Fall wird also einfach ein aktuelles Kamerabild verwendet, welches mittels der Sensoreinrichtung den angehängten Anhänger erfasst. Sollte die Perspektive der Kamera aufgrund der aktuellen Relativpositionierung des Kraftfahrzeugs zum Anhänger wenig oder nicht geeignet sein, um das dreidimensionale Modell dem realen Abbild überlagert anzuzeigen, sodass der Fahrer direkt und einfach erkennen kann, ob die Abmessungen korrekt erfasst worden sind, so kann - wie in der zweiten Alternative beschrieben - das während einer zuvor durchgeführten Kurvenfahrt des Gespanns aufgezeichnete Bild des Anhängers verwendet werden. In letzterem Fall kann sichergestellt werden, dass das aufgezeichnete Bild des Anhängers aus einer besonders günstigen Perspektivansicht dargestellt wird, sodass der Fahrer anhand der Überlagerung des dreidimensionalen Modells des Anhängers und des realen Abbilds des Anhängers besonders einfach erkennen kann, ob die Abmessungen und das dreidimensionale Modell des Anhängers exakt genug bestimmt worden sind.

Eine weitere vorteilhafte Ausführungsform der Erfindung sieht vor, dass nachdem die Abmessungen des Anhängers einmal ermittelt worden sind, die ermittelten Abmessungen zusammen mit anhängerspezifischen Eigenschaften, insbesondere einem elektrischen Widerstand eines Anschlusssystems des Anhängers, einer Deichsellänge des Anhängers und/oder fahrdynamischen Eigenschaften des Anhängers, gespeichert werden, wobei das Anhängerrangierassistenzsystem vor einem erneuten Rangiervorgang überprüft, ob die anhängerspezifischen Eigenschaften gegeben sind und in dem Fall die bereits ermittelten Abmessungen des Anhängers beim Rangieren verwendet. Wurden also einmal die Abmessungen des betreffenden Anhängers korrekt bestimmt, so ist es nicht erforderlich, die Abmessungen des Anhängers immer wieder vor einem Rangiervorgang neu zu bestimmen. Dadurch, dass die ermittelten Abmessungen des Anhängers zusammen mit den besagten anhängerspezifischen Eigenschaften abgespeichert werden, kann das Anhängerrangierassistenzsystem durch Überprüfung dieser anhängerspezifischen Eigenschaften ermitteln, ob es sich bei dem gerade angehängten Anhänger um einen Anhänger handelt, dessen Abmessungen bereits in der vorstehend beschriebenen Weise ermittelt worden sind. Beispielsweise kann anhand eines anhängerspezifischen elektrischen Widerstands eines Anschlusssystems des Anhängers auf einfache Weise bestimmt werden, ob es sich um denselben Anhänger handelt, bei welchem die Abmessungen bereits bestimmt worden sind. Auch ist es beispielsweise möglich, aus einer Bewegung einer Anhängerdeichsel bei bekannter Fahrzeugbewegung die Länge der Deichsel zu bestimmen. Dadurch ist es bei angehängtem Anhänger möglich, anhand der Deichsellänge zu ermitteln, ob es sich um einen Anhänger handelt, für den bereits die Abmessungen in der beschriebenen Weise bestimmt worden sind. Auch können anhängerspezifische fahrdynamische Eigenschaften des Anhängers, beispielsweise ein Schlingerverhalten oder dergleichen, hinterlegt werden. Diese fahrdynamischen Eigenschaften des Anhängers können während der Fahrt mit dem Gespann überprüft und mit den abgespeicherten Daten verglichen werden. Auf diese Weise ist es auch möglich, zu ermitteln, ob es sich bei dem angehängten Anhänger um einen solchen handelt, für welchen bereits die Abmessungen bestimmt worden sind. So ist es möglich, einmal bestimmte Abmessungen für einen spezifischen Anhänger immer wieder zu verwenden, ohne dass die Sensoreinrichtung des Kraftfahrzeugs den gerade angekoppelten Anhänger erneut erfassen muss und ohne dass die Auswerteeinrichtung basierend auf den Sensordaten die Abmessungen des Anhängers ein weiteres Mal bestimmen muss.

Das erfindungsgemäße Anhängerrangierassistenzsystem für ein Kraftfahrzeug, ist dazu eingerichtet, einen Rangiervorgang eines aus dem Kraftfahrzeug und einem Anhänger gebildeten Gespanns in eine Zielposition zu unterstützen. Das Anhängerrangierassistenzsystem ist dazu eingerichtet, Sensordaten von einer Sensoreinrichtung des Kraftfahrzeugs zu empfangen, welche dazu eingerichtet ist, bei an das Kraftfahrzeug angekoppeltem Anhänger Abmessungen des Anhängers in Längsrichtung, Querrichtung und Hochrichtung des Anhängers basierend auf den übermittelten Sensordaten mittels einer Auswerteeinrichtung zu ermitteln. Das Anhängerrangierassistenzsystem ist zudem dazu eingerichtet, unter Berücksichtigung der ermittelten Abmessungen den Rangiervorgang des Gespanns in die Zielposition zu unterstützen dadurch gekennzeichnet, dass das Anhängerrangierassistenzsystem dazu eingerichtet ist, basierend auf den ermittelten Abmessungen ein dreidimensionales Modell des Anhängers zu erstellen und so anzuzeigen, dass es ein reales angezeigtes Abbild des Anhängers teiltransparent überlagert und eine Benutzeraufforderung auszugeben, jeweilige Außenkanten des dreidimensionalen Modells des Anhängers mittels einer Bedieneinrichtung
des Kraftfahrzeugs so zu verschieben, bis die Außenkanten mit den Außenkanten des realen Abbildes des Anhängers übereinstimmen, wobei die Außenkanten entsprechend einer erfassten Betätigung der Bedieneinrichtung verschoben werden.

Vorteile und vorteilhafte Ausgestaltungen des erfindungsgemäßen Verfahrens sind als Vorteile und vorteilhafte Ausgestaltungen des Anhängerrangierassistenzsystems und umgekehrt anzusehen, wobei das Anhängerrangierassistenzsystem insbesondere Mittel zur Durchführung der Verfahrensschritte aufweist.

Das erfindungsgemäße Kraftfahrzeug umfasst das erfindungsgemäße Anhängerrangierassistenzsystem oder eine vorteilhafte Ausführungsform des erfindungsgemäßen Anhängerrangierassistenzsystems.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische Darstellung eines aus einem Kraftfahrzeug und einem Anhänger gebildeten Gespanns, wobei das Kraftfahrzeug ein Anhängerrangierassistenzsystem zum Unterstützen des Rangiervorgangs des Gespanns in eine Zielposition umfasst; und in
- Fig. 2: eine Anzeigeeinrichtung des Kraftfahrzeugs, mittels welcher ein dreidimensionales Modell des Anhängers so angezeigt wird, dass es ein reales angezeigtes Abbild des Anhängers halbtransparent überlagert.

In den Figuren sind gleiche oder funktionsgleiche Elemente mit den gleichen Bezugszeichen versehen worden.

Ein aus einem Kraftfahrzeug 10 und einem Anhänger 12 gebildetes Gespann 14 ist in einer schematischen Seitenansicht gezeigt. Bei dem Kraftfahrzeug 10 kann es sich im Wesentlichen um beliebige Zugfahrzeuge, wie beispielsweise PKWs und LKWs, handeln. Im Folgenden ist der Anhänger 12 lediglich als einachsiger Anhänger dargestellt. Bei dem Anhänger 12 kann es sich aber auch um mehrachsige Anhänger handeln. Vorliegend umfasst der gezeigte Anhänger 12 eine Deichsel 16. Es kann sich sowohl um eine starre Deichsel als auch um eine drehbare Deichsel handeln. Ferner ist es auch möglich, dass der Anhänger 12 gar keine Deichsel 16 benötigt, sondern als Auflieger ausgebildet ist.

Das Kraftfahrzeug 10 umfasst ein Anhängerrangierassistenzsystem 18, welches dazu eingerichtet ist, einen Rangiervorgang des Gespanns 14 in eine Zielposition, beispielsweise in eine Parklücke oder dergleichen, zu unterstützen. Das Anhängerrangierassistenzsystem 18 ist dazu eingerichtet, Sensordaten von einer Sensoreinrichtung zu empfangen, welche dazu eingerichtet ist, bei an das Kraftfahrzeug 10 angekoppeltem Anhänger 12 den Anhänger 12 zu erfassen und den erfassten Anhänger 12 betreffende Sensordaten an eine Auswerteeinrichtung 22 des Anhängerrangierassistenzsystems 18 zu übertragen. Die Auswerteeinrichtung 22 ist dazu eingerichtet, basierend auf den übermittelten Sensordaten Abmessungen des Anhängers 12 in Längsrichtung, Querrichtung und Hochrichtung des Anhängers 12 zu ermitteln. Das Anhängerrangierassistenzsystem 18 ist dazu eingerichtet, unter Berücksichtigung der ermittelten Abmessungen den Rangiervorgang des Gespanns 14 in die Zielposition zu unterstützen.

Die Sensoreinrichtung 20 des Kraftfahrzeugs 10 kann unterschiedlichste Arten von Sensoren an unterschiedlichsten Positionen des Kraftfahrzeugs 10 aufweisen. So kann die Sensoreinrichtung 20 beispielsweise in den Außenspiegeln sowie an den Fahrzeugsäulen, insbesondere an der B-Säule und C-Säule, angeordneten Kameras aufweisen. Zudem kann die Sensoreinrichtung 20 beispielsweise auch eine Rückfahrkamera aufweisen. Ferner ist es auch möglich, dass die Sensoreinrichtung 20 beispielsweise auch Radar- und/oder Lidarsensoren aufweist, mittels welchen der angekoppelte Anhänger 12 erfasst werden kann. All diese Sensoren der Sensoreinrichtung 20 können entsprechende Sensordaten an die Sensoreinrichtung 20 übertragen, welche basierend darauf die Abmessungen des Anhängers 12 in allen Raumrichtungen ermitteln kann.

Möchte ein Fahrer des Gespanns 14 dieses beispielsweise rückwärts in eine Parklücke manövrieren und sich dabei von dem Anhängerrangierassistenzsystem 18 unterstützen lassen, so kann er beispielsweise bei eingelegtem Rückwärtsgang das Anhängerrangierassistenzsystem 18 aktivieren, wobei es auch möglich ist, dass das Anhängerrangierassistenzsystem 18 sich selbstständig aktiviert, sobald der Rückwärtsgang eingelegt wird. Mittels der Sensoreinrichtung 20 wird der angehängte Anhänger 12 erfasst, wobei diesbezügliche Sensordaten an die Auswerteeinrichtung 22 übertragen werden. Diese ermittelt dann basierend auf diesen Sensordaten die Abmessungen des Anhängers 12 in Längsrichtung, Querrichtung und Hochrichtung des Anhängers 12. Insbesondere ist es dadurch auch möglich, die Abmessungen in allen Raumrichtungen der hier nicht näher bezeichneten Aufbaus des Anhängers 12 zuverlässig zu bestimmen. Anschließend unterstützt das Anhängerrangierassistenzsystem 18 den gewünschten Rangiervorgang des Gespanns 14 beispielsweise bei einer autonomen oder teilautonomen Rückwärtsfahrt in eine Parklücke. Das Anhängerrangierassistenzsystem 18 kann also beispielsweise die Längsführung und Querführung des Kraftfahrzeugs 10 vollständig übernehmen, um das Gespann 14 in Kenntnis der ermittelten Abmessungen des Anhängers 12 sicher und kollisionsfrei in die Parklücke zu manövrieren.

Je nach Erfassungsbereich der verschiedenen Sensoren der Sensoreinrichtung 20 und je nach Relativpositionierung des Anhängers 12 zum Kraftfahrzeug 10 kann es vorkommen, dass die Sensoreinrichtung 20 keine hinreichend guten Sensordaten liefern kann, auf deren Basis die Abmessungen des Anhängers 12 in allen Raumrichtungen zuverlässig erfasst werden können. In dem Fall kann es vorgesehen sein, dass beispielsweise mittels eines als Ausgabeeinrichtung dienenden Touchscreens 24 des Kraftfahrzeugs 10 eine Aufforderung zum Durchführen einer Kurvenfahrt ausgegeben wird, also falls anhand der Sensordaten ermittelt wird, dass die Abmessungen des Anhängers 12 nicht vollständig basierend auf den Sensordaten ermittelt werden konnten. Mittels des Touchscreens 24 kann beispielsweise eine konkret durchzuführenden Kurvenfahrt angezeigt werden, indem beispielsweise eine Solltrajektorie für die durchzuführende Kurvenfahrt angezeigt wird. Auch ist es möglich, alternativ oder zusätzlich die durchzuführende Kurvenfahrt zum Beispiel mittels eines hier nicht näher gezeigten Head-Up-Displays des Kraftfahrzeugs 10 einzublenden. So oder so kann der Fahrer des Kraftfahrzeugs 10 erkennen, was für eine Kurvenfahrt er mit dem Gespann 14 in Vorwärtsfahrtrichtung durchführen soll, damit die Abmessungen des Anhängers 12 zuverlässig erfasst werden können. Sobald genügend gute Sensordaten während der Kurvenfahrt ermittelt werden konnten, kann der Touchscreen 24 beispielsweise signalisieren, dass die Kurvenfahrt beendet werden kann. Alternativ oder zusätzlich können auch die Kurvenfahrt betreffende Informationen noch akustisch wiedergegeben werden. Liegen dann hinreichend gute Abmessungen des Anhängers 12 vor, kann das Anhängerrangierassistenzsystem 18 das Gespann 14 beispielsweise teilautonom oder vollautonom in eine Parklücke einparken.

Vorzugsweise ist es vorgesehen, dass basierend auf den ermittelten Abmessungen ein dreidimensionales Modell 26 des Anhängers 12 erstellt und so angezeigt wird, dass es ein real angezeigtes Abbild 28 des Anhängers 12 teiltransparent überlagert.

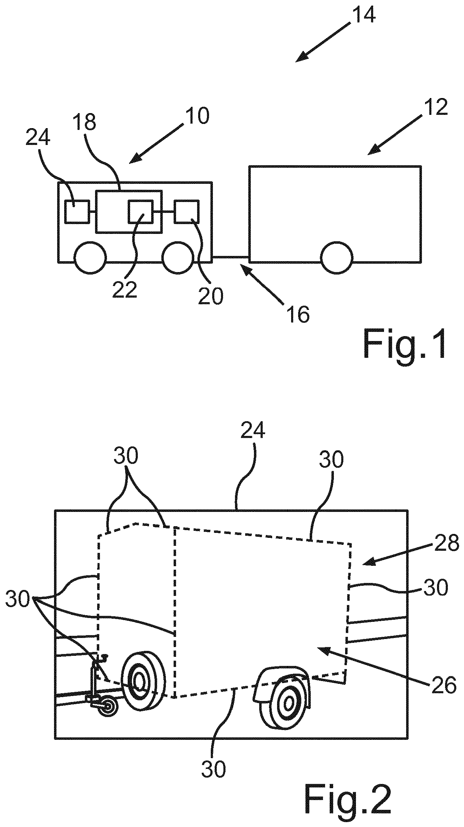

In Fig. 2 ist der Touchscreen 24 des Kraftfahrzeugs 10 gezeigt, mittels welchem das dreidimensionale Modell 26 als teiltransparente Überlagerung des realen Abbilds 28 angezeigt wird. So kann der Fahrer des Kraftfahrzeugs 10 anhand des Touchscreens 24 einfach erkennen, ob die Abmessungen und insbesondere das dreidimensionale Modell 26 korrekt ermittelt worden sind. Bei dem realen Abbild 28 des Anhängers 12 kann es sich um ein momentan mittels einer Rückfahrkamera der Sensoreinrichtung 20 aufgezeichnetes Bild des Anhängers 12 handeln. Alternativ ist es auch möglich, dass ein schon zuvor während einer Kurvenfahrt des Gespanns 14 aufgezeichnetes Bild des Anhängers 12 verwendet wird. In letzterem Fall kann auf jeden Fall sichergestellt werden, dass das reale Abbild 28 aus einer besonders günstigen Perspektive angezeigt wird, sodass der Fahrer des Kraftfahrzeugs 10 einfach erkennen kann, ob das dreidimensionale Modell 26 hinreichend der Realität entspricht.

Über Lautsprecher und/oder den Touchscreen 24 kann eine Benutzeraufforderung ausgegeben werden, jeweilige Außenkanten 30 des dreidimensionalen Modells 26 des Anhängers 12 mittels des Touchscreens 24 so zu verschieben, bis die Außenkanten 30 mit jeweiligen hier nicht näher gekennzeichneten Außenkanten des realen Abbilds 28 übereinstimmen. Die Außenkanten 30 werden entsprechend einer erfassten Betätigung des Touchscreens 24 verschoben. Über den Touchscreen 24 kann der Fahrer beispielsweise bestätigen, wenn er seine Korrekturmaßnahmen hinsichtlich der Verschiebung der Außenkanten 30 abgeschlossen hat. Anschließend werden die Abmessungen des Anhängers 12 basierend auf den verschobenen Außenkanten 30 ermittelt und beim Unterstützen des Rangiervorgangs mittels des Anhängerrangierassistenzsystems 18 zugrunde gelegt.

Einmal ermittelte Abmessungen des Anhängers 12 sowie das dreidimensionale Modell 26 können auch zusammen mit anhängerspezifischen Eigenschaften gespeichert werden. Bei den anhängerspezifischen Eigenschaften kann es sich beispielsweise um einen elektrischen Widerstand eines Anschlusssystems des Anhängers 12, um eine Deichsellänge des Anhängers 12 und/oder um ganz bestimmte fahrdynamische Eigenschaften, beispielsweise ein Schlingerverhalten oder dergleichen, des Anhängers 12 handeln. Das Anhängerrangierassistenzsystem 18 überprüft vor einem erneuten Rangiervorgang, ob die anhängerspezifischen Eigenschaften gegeben sind, wobei in dem Fall die bereits ermittelten Abmessungen des Anhängers 12 beim Rangieren verwendet werden. Dadurch ist es nicht erforderlich, die Abmessungen des Anhängers 12 immer wieder von neuem zu bestimmen.

Mittels des erläuterten Verfahrens und des erläuterten Anhängerrangierassistenzsystems 18 ist es also möglich, bei angehängtem Anhänger 12 die Abmessungen des Anhängers 12 und insbesondere basierend darauf auch ein dreidimensionales Modell 26 des Anhängers 12 zu ermitteln und diese Daten beziehungsweise Informationen beim Unterstützen des Rangiervorgangs des Gespanns 14 in eine ganz bestimmte Zielposition zu berücksichtigen beziehungsweise zu verwenden. In Kenntnis der Geometrie des Anhängers 12 ist es so zuverlässig möglich, Kollisionen mit Hindernissen beim Rangieren des Gespanns 14 zu vermeiden. So kann ein besonders sicheres und zuverlässiges Rangieren des Gespanns 14 mittels des Anhängerrangierassistenzsystems 18 gewährleistet werden.

## Patentansprüche

1. Verfahren zum Betreiben eines Anhängerrangierassistenzsystems (18) eines Kraftfahrzeugs (10), bei welchem ein Rangiervorgang eines aus dem Kraftfahrzeug (10) und einem Anhänger (12) gebildeten Gespanns (14) in eine Zielposition mittels des Anhängerrangierassistenzsystems (18) unterstützt wird, mit den Schritten:
- Erfassen des Anhängers (12) mittels einer Sensoreinrichtung (20) des Kraftfahrzeugs (10) bei an das Kraftfahrzeug (10) angekoppeltem Anhänger (12) und Übertragen von den erfassten Anhänger (12) betreffende Sensordaten an eine Auswerteeinrichtung (22) des Anhängerrangierassistenzsystems (18);
- Ermitteln von Abmessungen des Anhängers (12) in Längsrichtung, Querrichtung und Hochrichtung des Anhängers (12) basierend auf den übermittelten Sensordaten mittels der Auswerteeinrichtung (22);
- Unterstützen des Rangiervorgangs des Gespanns (14) in die Zielposition unter Berücksichtigung der ermittelten Abmessungen des Anhängers (12),
**dadurch gekennzeichnet, dass**,
basierend auf den ermittelten Abmessungen ein dreidimensionales Modell (26) des Anhängers (12) erstellt und so angezeigt wird, dass es ein reales angezeigtes Abbild (28) des Anhängers (12) teiltransparent überlagert
und
eine Benutzeraufforderung ausgegeben wird, jeweilige Außenkanten (30) des dreidimensionalen Modells (26) des Anhängers (12) mittels einer Bedieneinrichtung des Kraftfahrzeugs (10) so zu verschieben, bis die Außenkanten (30) mit den Außenkanten (30) des realen Abbildes (28) des Anhängers (12) übereinstimmen, wobei die Außenkanten (30) entsprechend einer erfassten Betätigung der Bedieneinrichtung verschoben werden.

2. Verfahren nach Anspruch 1,
**dadurch gekennzeichnet, dass**
mittels einer Ausgabeeinrichtung des Kraftfahrzeugs (10) eine Aufforderung zum Durchführen einer Kurvenfahrt ausgegeben wird, falls anhand der Sensordaten ermittelt wird, dass die Abmessungen des Anhängers (12) nicht vollständig basierend auf den Sensordaten ermittelt werden konnten.

3. Verfahren nach Anspruch 2,
**dadurch gekennzeichnet, dass**
die Ausgabeeinrichtung die durchzuführende Kurvenfahrt anzeigt.

4. Verfahren nach einem der vorhergehenden Ansprüche,
**dadurch gekennzeichnet, dass**
als das reale Abbild (28) des Anhängers (12) ein momentan mittels einer Kamera der Sensoreinrichtung (20) aufgezeichnetes Bild des Anhängers (12) oder ein während einer Kurvenfahrt des Gespanns aufgezeichnetes Bild des Anhängers (12) verwendet wird.

5. Verfahren nach einem der vorhergehenden Ansprüche,
**dadurch gekennzeichnet, dass**
die Abmessungen des Anhängers (12) basierend auf verschobenen Außenkanten (30) ermittelt werden.

6. Verfahren nach einem der vorhergehenden Ansprüche,
**dadurch gekennzeichnet, dass**
nachdem die Abmessungen des Anhängers (12) einmal ermittelt worden sind, die ermittelten Abmessungen zusammen mit anhängerspezifischen Eigenschaften, insbesondere einem elektrischen Widerstand eines Anschlusssystems des Anhängers (12), einer Deichsellänge des Anhängers (12) und/oder fahrdynamischen Eigenschaften des Anhängers (12), gespeichert werden, wobei das Anhängerrangierassistenzsystem (18) vor einem erneuten Rangiervorgang überprüft, ob die anhängerspezifischen Eigenschaften gegeben sind und in dem Fall die bereits ermittelten Abmessungen des Anhängers (12) beim Rangieren verwendet.

7. Anhängerrangierassistenzsystem (18) für ein Kraftfahrzeug (10), welches dazu eingerichtet ist, einen Rangiervorgang eines aus dem Kraftfahrzeug (10) und einem Anhänger (12) gebildeten Gespanns (14) in eine Zielposition zu unterstützen, wobei
- das Anhängerrangierassistenzsystem (18) dazu eingerichtet ist, Sensordaten von einer Sensoreinrichtung (20) des Kraftfahrzeugs (10) zu empfangen, welche dazu eingerichtet ist, bei an das Kraftfahrzeug (10) angekoppeltem Anhänger;
- Abmessungen des Anhängers (12) in Längsrichtung, Querrichtung und Hochrichtung des Anhängers (12) basierend auf den übermittelten Sensordaten mittels der Auswerteeinrichtung (22) zu ermitteln;
- den Rangiervorgang des Gespanns (14) in die Zielposition unter Berücksichtigung der ermittelten Abmessungen des Anhängers (12) zu unterstützen;
**dadurch gekennzeichnet, dass**
das Anhängerrangierassistenzsystem (18) dazu eingerichtet ist, basierend auf den ermittelten Abmessungen ein dreidimensionales Modell (26) des Anhängers (12) zu erstellen und so anzuzeigen, dass es ein reales angezeigtes Abbild (28) des Anhängers (12) teiltransparent überlagert
und
eine Benutzeraufforderung auszugeben, jeweilige Außenkanten (30) des dreidimensionalen Modells (26) des Anhängers (12) mittels einer Bedieneinrichtung des Kraftfahrzeugs (10) so zu verschieben, bis die Außenkanten (30) mit den Außenkanten (30) des realen Abbildes (28) des Anhängers (12) übereinstimmen, wobei die Außenkanten (30) entsprechend einer erfassten Betätigung der Bedieneinrichtung verschoben werden.

8. Kraftfahrzeug (10) mit einem Anhängerrangierassistenzsystem (18) nach Anspruch 7

## Claims

1. Method for operating a trailer maneuvering assistance system (18) of a
motor vehicle (10), in which a maneuvering operation of a tandem (14) consisting of a motor vehicle (10) and a trailer (12) into a target position is supported by means of the trailer maneuvering assistance system (18), comprising the steps of:
- detecting the trailer (12) by means of a sensor device (20) of the motor vehicle (10) when the trailer (12) is coupled to the motor vehicle (10) and transmitting to an evaluation device (22) of the trailer maneuvering assistance system (18) sensor data concerning the detected trailer (12);
- determining, by means of the evaluation device, (22) dimensions of the trailer (12) in the longitudinal direction, transverse direction, and vertical direction of the trailer (12) on the basis of the transmitted sensor data;
- supporting the maneuvering operation of the tandem (14) into the target position, taking into account the determined dimensions of the trailer (12),
**characterized in that**
on the basis of the determined dimensions, a three-dimensional model (26) the trailer (12) is created and displayed, so that a real displayed image (28) of the trailer (12) is semi-transparently overlaid,
and
a user request is issued that the respective outer edges (30) of the three-dimensional model (26) of the trailer (12) be moved by means of an operating device of the motor vehicle (10) until the outer edges (30) coincide with the outer edges (30) of the real image (28) of the trailer (12), wherein the outer edges (30) are shifted in accordance with a detected actuation of the operating device.

2. Method according to claim 1,
**characterized in that,**
by means of an output device of the motor vehicle (10), a request to execute a curved path is output if it is determined on the basis of the sensor data that the dimensions of the trailer (12) could not be completely determined on the basis of the sensor data.

3. Method according to claim 2,
**characterized in that**
the output device indicates the curved path to be executed.

4. Method according to one of the preceding claims,
**characterized in that**
an image of the trailer (12) currently recorded by means of a camera of the sensor device (20) or an image of the trailer (12) recorded while the tandem is moving on a curved path is used as the real image (28) of the trailer (12).

5. Method according to one of the preceding claims,
**characterized in that**
the dimensions of the trailer (12) are determined on the basis of shifted outer edges (30).

6. Method according to one of the preceding claims,
**characterized in that,**
after the dimensions of the trailer (12) have been determined once, the determined dimensions together with trailer-specific properties - in particular, an electrical resistance of a connection system of the trailer (12), a drawbar length of the trailer (12), and/or driving dynamics properties of the trailer (12) - are saved, wherein, before a renewed maneuvering operation, the trailer maneuvering assistance system (18) is checked as to whether the trailer-specific properties are given and, in this case, whether the already-determined dimensions of the trailer (12) are used during maneuvering.

7. Trailer maneuvering assistance system (18) for a motor vehicle (10), which is configured to support a maneuvering operation of a tandem (14) consisting of a motor vehicle (10) and a trailer (12) into a target position, wherein
- the trailer maneuvering assistance system (18) is configured to receive sensor data from a sensor device (20) of the motor vehicle (10), which is configured, in the case of a trailer coupled to the motor vehicle (10);
- to determine, by means of the evaluation device (22), the dimensions of the trailer (12) in the longitudinal direction, transverse direction, and vertical direction of the trailer (12) on the basis of the transmitted sensor data;
- to support the maneuvering operation of the tandem (14) into the target position, while taking into account the determined dimensions of the trailer (12),
**characterized in that**
the trailer maneuvering assistance system (18) is configured to create a three-dimensional model (26) of the trailer (12) on the basis of the determined dimensions and to display it in such a way that a real displayed image (28) of the trailer (12) is semi-transparently overlaid,
and
to issue a user request that the respective outer edges (30) of the three-dimensional model (26) of the trailer (12) be shifted by means of an operating device of the motor vehicle (10) until the outer edges (30) coincide with the outer edges (30) of the real image (28) of the trailer (12), wherein the outer edges (30) are shifted in accordance with a detected actuation of the operating device.

8. Motor vehicle (10) having a trailer maneuvering assistance system (18) according to claim 7.

## Revendications

1. Procédé de fonctionnement d'un système d'aide à la manoeuvre de remorque (18) d'un
véhicule automobile (10), dans lequel une aide pour un processus de manœuvre d'un attelage (14) formé par le véhicule automobile (10) et une remorque (12) dans une position cible est fournie au moyen du système d'aide à la manœuvre de remorque (18), comprenant les étapes de :
- détection de la remorque (12) au moyen d'un dispositif de capteurs (20) du véhicule automobile (10) avec la remorque (12) attelée au véhicule automobile (10) et transmission de données de capteur concernant la remorque (12) détectée à un dispositif d'évaluation (22) du système d'aide à la manœuvre de remorque (18) ;
- détermination de dimensions de la remorque (12) dans le sens de la longueur, le sens transversal et le sens de la hauteur de la remorque (12) sur la base des données de capteur transmises, au moyen du dispositif d'évaluation (22) ;
- aide au processus de manœuvre de l'attelage (14) dans la position cible en tenant compte des dimensions déterminées de la remorque (12),
**caractérisé en ce que,**
sur la base des dimensions déterminées, un modèle tridimensionnel (26) de la remorque (12) est créé et affiché de telle manière qu'il recouvre de manière partiellement transparente une image (28) réelle affichée de la remorque (12)
et
une demande à destination de l'utilisateur est émise, lui demandant de déplacer des bords extérieurs (30) respectifs du modèle tridimensionnel (26) de la remorque (12) au moyen d'un dispositif de commande du véhicule automobile (10) jusqu'à ce que les bords extérieurs (30) coïncident avec les bords extérieurs (30) de l'image (28) réelle de la remorque (12), les bords extérieurs (30) étant déplacés conformément à un actionnement détecté du dispositif de commande.

2. Procédé selon la revendication 1,
**caractérisé en ce que**
une demande d'exécution d'un virage est émise au moyen d'un dispositif de sortie du véhicule automobile (10), s'il est déterminé à l'aide des données de capteur que les dimensions de la remorque (12) ne peuvent pas être déterminées entièrement sur la base des données de capteur.

3. Procédé selon la revendication 2,
**caractérisé en ce que**
le dispositif de sortie affiche le virage à exécuter.

4. Procédé selon l'une quelconque des revendications précédentes,
**caractérisé en ce que,**
en guise d'image (28) réelle de la remorque (12), une image de la remorque (12) actuellement enregistrée au moyen d'une caméra du dispositif de capteurs (20) ou une image de la remorque (12) enregistrée pendant un virage de l'attelage est utilisée.

5. Procédé selon l'une quelconque des revendications précédentes,
**caractérisé en ce que**
les dimensions de la remorque (12) sont déterminées sur la base de bords extérieurs (30) déplacés.

6. Procédé selon l'une quelconque des revendications précédentes,
**caractérisé en ce que,**
après que les dimensions de la remorque (12) ont été déterminées une fois, les dimensions déterminées sont enregistrées avec des propriétés spécifiques de la remorque, en particulier une résistance électrique d'un système de raccordement de la remorque (12), une longueur de timon de la remorque (12) et/ou des propriétés de dynamique de mouvement de la remorque (12), le système d'aide à la manœuvre de remorque (18) vérifiant avant un nouveau processus de manœuvre si les propriétés spécifiques de la remorque sont données et utilisant dans ce cas les dimensions déjà déterminées de la remorque (12) lors de la manoeuvre.

7. Système d'aide à la manœuvre de remorque (18) pour un véhicule automobile (10), qui est configuré pour aider à exécuter un processus de manœuvre d'un attelage (14) formé par le véhicule automobile (10) et une remorque (12) dans une position cible, dans lequel
- le système d'aide à la manœuvre de remorque (18) est configuré pour recevoir des données de capteur d'un dispositif de capteurs (20) du véhicule automobile (10), ledit dispositif de capteurs étant configuré pour, lorsque la remorque est attelée au véhicule automobile (10) ;
- déterminer des dimensions de la remorque (12) dans le sens de la longueur, le sens transversal et le sens de la hauteur de la remorque (12) sur la base des données de capteur transmises, au moyen du dispositif d'évaluation (22) ;
- aider à l'exécution du processus de manœuvre de l'attelage (14) dans la position cible en tenant compte des dimensions déterminées de la remorque (12) ;
**caractérisé en ce que**
le système d'aide à la manœuvre de remorque (18) est configuré pour, sur la base des dimensions déterminées, créer et afficher un modèle tridimensionnel (26) de la remorque (12) de telle manière qu'il recouvre de manière partiellement transparente une image (28) réelle affichée de la remorque (12)
et
émettre une demande à destination de l'utilisateur, lui demandant de déplacer des bords extérieurs (30) respectifs du modèle tridimensionnel (26) de la remorque (12) au moyen d'un dispositif de commande du véhicule automobile (10) jusqu'à ce que les bords extérieurs (30) coïncident avec les bords extérieurs (30) de l'image (28) réelle de la remorque (12), les bords extérieurs (30) étant déplacés conformément à un actionnement détecté du dispositif de commande.

8. Véhicule automobile (10) comprenant un système d'aide à la manœuvre de remorque (18) selon la revendication 7.
